Europäisches Patentamt

European Patent Office

Office européen des brevets

(19)

(11)  **EP 1 215 406 A1**

(12)  # EUROPEAN PATENT APPLICATION

(43) Date of publication:
   **19.06.2002  Bulletin 2002/25**

(51) Int Cl.⁷: **F16C 29/04**, B23Q 1/40,
   B21D 37/12

(21) Application number: **01310169.6**

(22) Date of filing: **05.12.2001**

(84) Designated Contracting States:
   **AT BE CH CY DE DK ES FI FR GB GR IE IT LI LU
   MC NL PT SE TR**
   Designated Extension States:
   **AL LT LV MK RO SI**

(30) Priority: **05.12.2000  JP 2000370678
         22.01.2001  JP 2001012707**

(71) Applicant: **ISEL CO., LTD.
   Yao-shi, Osaka-fu, 581-0068 (JP)**

(72) Inventor: **Masanori, Mochizuki
   Yao-shi, Osaka 581-0074 (JP)**

(74) Representative: **Abbie, Andrew Kenneth et al
   R.G.C. Jenkins & Co.
   26 Caxton Street
   London SW1H 0RJ (GB)**

(54)   **Guide device for linear motion**

(57)   A guide device (1) includes a ram (2) and a column (3) translatable axially relative to each other. The ram (2) has an outer circumferential surface of a squared cross section formed of four flat portions (20) each of which extends axially. The column (3) disposed around the ram (2) has a through hole (3a) of a squared cross section formed of four flat portions (30) corresponding to the flat portions (20) of the ram (2). In each flat portion (30) of the column (3) is provided a needle bearing (5) that rolls on the corresponding flat portion (20) of the ram (2). Inside the column (3) are provided a plurality of supporting shafts (4) extending in a direction perpendicular to the extending direction or to the axial direction of each flat portion (20) of the ram (2). Each needle bearing (5) is rotatably supported by the corresponding supporting shaft (4).

FIG. 2

EP 1 215 406 A1

## Description

## BACKGROUND OF THE INVENTION

The present invention relates to a guide device, and more particularly, to a linear guide device for slidably supporting a column and a ram relative to each other.

In press working, a die set is used to improve working accuracy. The die set includes a punch holder to hold a punch, a die holder disposed opposite the punch holder to hold a die, and a guide post to slidably support each holder in the axial direction. The guide post includes a post extending vertically, a sleeve slidable around the post, and a linear bearing interposed between the post and the sleeve.

A prior-art linear bearing used for such a guide post is, for example, a ball bearing having a multiple steel balls received in a cylindrical retainer, or a needle bearing having a multiple needles received in a tubular retainer of a polygonal shaped cross section, as shown in Japanese patent application laying-open publication No. 3-81035.

In operation of the conventional guide post, while the post reciprocates relative to the sleeve, or the post enters and exits the sleeve repetitively, the retainer tends to gradually move upwardly along the post. Therefore, it was necessary to consider travel range of the sleeve in designing e.g. to determine the length of the sleeve in estimation for travel range of the sleeve. Also, since the retainer is generally made of plastics, when a greater torsion occurs between the post and the sleeve, retaining of the needles by the retainer becomes inadequate, which may cause skewing of the needles. Additionally, needle bearings were not suitable for dusty atmosphere because a needle has such a small diameter that its smooth rotation may be hindered when it bites dust or small particles on a rolling surface.

An object of the present invention is to provide a guide device having a retainerless linear motion mechanism for supporting a ram and column slidable relative to each other.

Another object of the present invention is to provide a guide device that can be used in a dusty atmosphere.

A yet another object of the present invention is to increase an allowable load of the guide device.

A further object of the present invention is to advance supporting rigidity of the guide device.

A still further object of the present invention is to facilitate working process, especially boring of the guide device.

## SUMMARY OF THE INVENTION

The present invention relates to a guide device for slidably supporting a ram and column. In one embodiment, the ram includes an outer circumferential surface of a polygonal cross section having a plurality of ram flat portions . Each of the ram flat portions extends along the axial direction of the ram. The column is disposed around the ram and has a through hole of a polygonal cross section having a plurality of column flat portions oppositely disposed to the ram flat portions. A plurality of roller-shaped rolling elements or rollers are provided on each of the column flat portions so as to roll on each of the ram flat portions. A plurality of supporting shafts extending perpendicularly to the axial direction are provided to support the corresponding rolling elements. The rolling elements at the adjacent column flat portions are disposed at corners of the through hole. Each of the supporting shafts is supported on both end portions inside the column. An axially extending groove is formed on each of the column flat portions and the rolling elements are received in the axially extending groove. The axially extending groove may have an oil retaining member such as oil retaining plastics or oil retaining felt inserted thereinto.

In operation, when the ram and column slides relative to each other the rolling elements roll axially on the ram flat portions. In this case, since each rolling element acts as a linear bearing, retainerless guide device is achieved. Also, since each supporting shaft for rotatably supporting each rolling element extends perpendicularly to the axial direction, or to the direction of relative movement of the ram and column, each rolling element is prevented from skewing. Furthermore, since the rolling elements are disposed at the corners of the through hole of the column, each corner portion of the ram can be held firmly. Thus, an excessive torsion occurred between the ram and the column can be sustained and skewing of each rolling element can be prevented from occurring. In addition, since each supporting shaft is supported on both end portion, supporting rigidity is improved. Also, the rolling elements are received in the axially extending groove, which facilitates boring process of the column. Furthermore, in operation of the guide device, during rotation of the rolling elements, oil gradually bleeds from the oil retaining member contacting the rolling elements, thereby preventing seizure or wear to the rolling surface resulting from the breakage of oil film on the rolling surface. Thus, a long-term lubrication of the rolling surface is possible.

In a second embodiment, the ram has a central hole formed with a first spiral groove. A screw shaft is inserted into the central hole of the ram and has an outer circumferential surface formed with a second spiral groove. Between the ram and the column is interposed a thin-walled, cylindrical retainer rotatably supporting a plurality of balls adapted to roll on both the first and second spiral grooves.

In operation, when the screw shaft rotates, each ball rolls along each spiral groove of the screw shaft and ram. Thereby, the ram moves axially along the screw shaft. During this movement, each rolling element guides the travel of the ram. The ram functions as a nut of a ball thread.

In a third embodiment, the ram includes a round outer circumferential surface. The column is disposed around the ram and has a through hole of a round cross shape. A plurality of pockets are formed on the through hole of the column. Inside each pocket are provided a roller-shaped rolling element that rolls axially on the ram, and a supporting shaft that supports the rolling element rotatably. The rolling element has a concavely curved cylindrical surface. A radius r of curvature of a generating line of the cylindrical surface satisfies the inequality; $0.52D \leqq r \leqq 0.58D$, wherein D is a diameter of the outer circumferential surface of the ram. The rolling element may have a cylindrical surface with a linear generating line. Alternatively, the rolling element may include a first rolling element that satisfies the above inequality and a second rolling element having a linear generating line. The first rolling element may be placed at a region where relatively greater loads are applied and the second rolling element may be placed at a region where relatively smaller loads are applied. Each of the pockets is formed at an opening of the through hole of the column and spaced equally circumferentially. Each supporting shaft is inserted into a supporting hole formed in each pocket, and is supported on both end portions. Preferably, each supporting hole penetrates the outer circumferential surface of the column. Between the ram and the column may be interposed a thin-walled, cylindrical member that has a plurality of apertures corresponding to the pockets of the column and that can bear a radial load. The cylindrical member may be formed of bearing materials.

In operation, when the ram and column slides relative to each other the rolling elements roll axially on the ram flat portions. In this case, since each rolling element acts as a linear bearing, retainerless guide device is achieved. Also, since the cylindrical surface of the rolling element is concavely curved, contact area with the ram increases and surface pressure of the rolling surface decreases, thereby improving wear resistance and advancing an allowable load. Furthermore, smooth rotation of the rolling elements can be secured and skewing of the rolling elements can be prevented. Additionally, in the case that radius r of curvature of the generating line of a rolling element is smaller than 0.52D, smooth rotation of the rolling element is hindered and differential slippage tends to occur. In the case that radius r of curvature of the generating line of a rolling element is larger than 0.52D, contact area decreases and an allowable load tends to be lowered. When a cylindrical surface of the rolling element has a linear generating line, working of the rolling element becomes easier. Also, since each pocket is disposed at an opening of the through hole of the column, the axis of the column is prevented from inclining relative to the axis of the ram when a radial load is applied. Moreover, since each supporting hole penetrates the outer circumferential surface of the column, boring of the column will be conducted more accurately and easily.

## BRIEF DESCRIPTION OF THE DRAWINGS

For a more complete understanding of the invention, reference should be made to the embodiments illustrated in greater detail in the accompanying drawings and described below by way of examples of the invention. In the drawings, which are not to scale:

FIG. 1 is a cutaway front elevational view of a guide device according to one embodiment of the present invention, corresponding to a cross sectional view of FIG. 2 taken along line I - I.
FIG. 2 is a cross sectional view of FIG. 1, taken along line II - II.
FIG. 3 is an enlarged view of a portion of FIG. 2.
FIG. 4 is a perspective view of a portion of an oil retaining member used with the guide device of FIG. 1.
FIG. 5 is a schematic illustrating a guide device of the present invention incorporating a ball screw.
FIG. 6 is a front sectional view of a guide device according to another embodiment of the present invention, corresponding to a cross sectional view of FIG. 7 taken along line VI- VI.
FIG. 7 is a cross sectional view of FIG. 6 taken along line VII - VII.
FIG. 8 is an enlarged view of a portion of FIG. 7.
FIG. 9 is a further enlarged view of a portion of FIG. 8.
FIG. 10 is a perspective view of a thin-walled cylindrical member used with the guide device of FIG. 1.

## DETAILED DESCRIPTION OF THE PREFERRED EMBODIMENTS

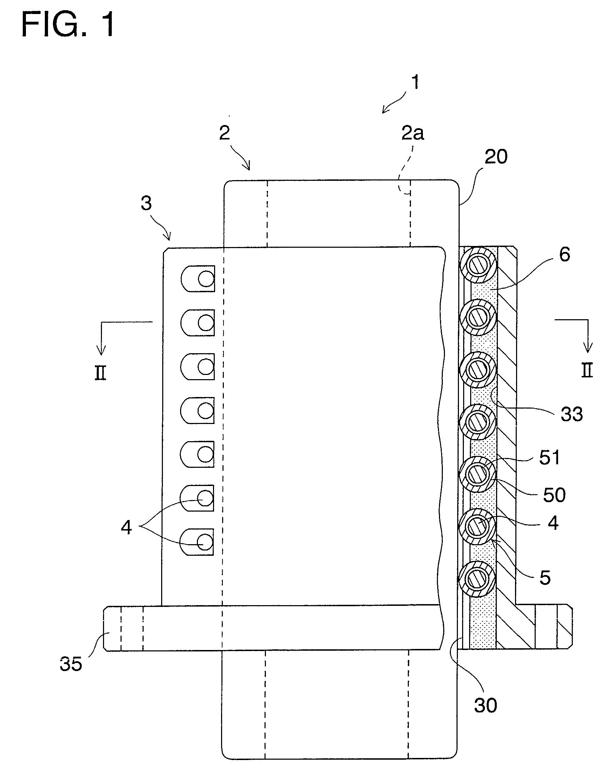

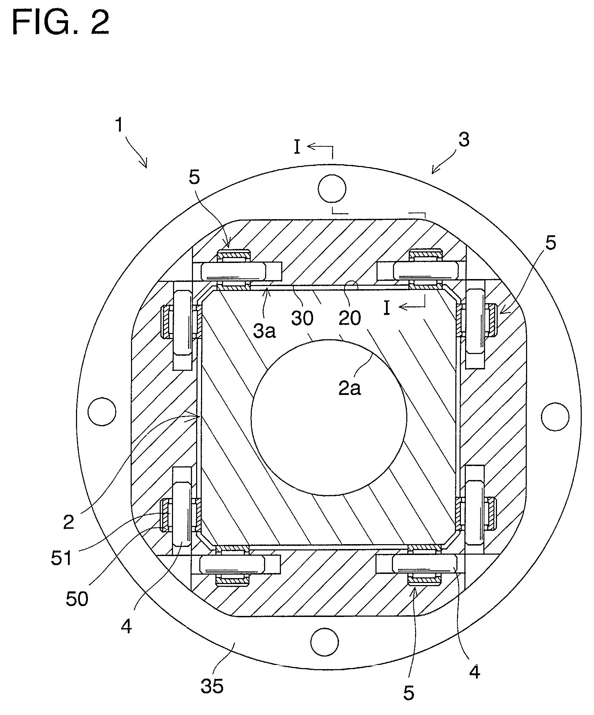

Referring now to the drawings, FIGS. 1 to 4 show a first embodiment of the present invention. As shown in FIGS. 1 and 2, a guide device 1 includes an axially extending ram 2 having a central through hole 2a and a tubular column 3 disposed around the ram 2 and slidable relative to the ram 2.

The ram 2 has an outer circumferential surface of a squared cross shape formed of four flat portions 20. Each of the flat portions 20 extends axially.

The column 3 is disposed around the outer circumferential surface of the ram 2 and has a central through hole 3a of a squared cross shape formed of four flat portions 30 each disposed opposite to each flat portion 20 of the ram 2. A needle bearing 5 is provided at each flat portion 30.

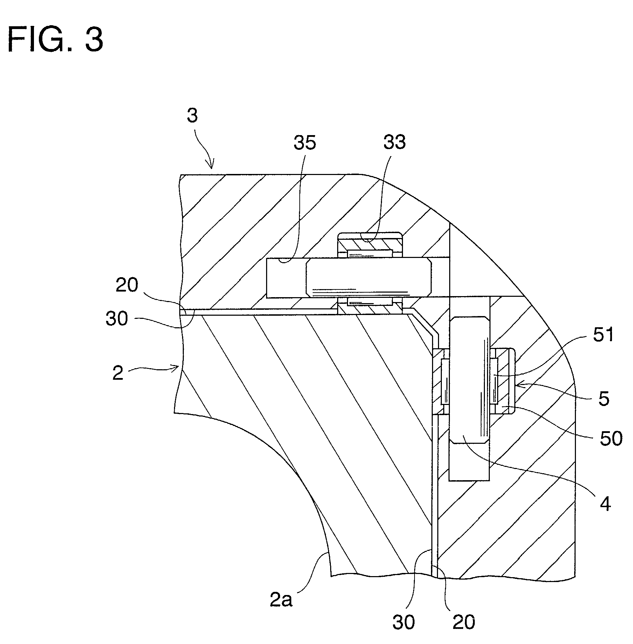

The needle bearing 5, shown in FIG. 3, includes a cylindrical outer race 50 and a plurality of needles 51 provided on an inner circumferential side of the outer race 50. A supporting shaft 4 passes through the needle bearing 5 and the needle bearing 5 is supported rotatably around the supporting shaft 4. The outer race 50 of the needle bearing 5 contacts the corresponding flat portion 20 of the ram 2.

Each supporting shaft 4 is inserted into a supporting hole 35 formed in the column 3 and is supported on both ends in the supporting hole 35. Thereby, supporting rigidity is improved and thus, adequate support of the needle bearing 5 is secured. Also, each supporting shaft 4 extends toward the direction perpendicular to the extending direction of each flat portion 20 of the ram 2.

Each flat portion 30 defining the central through hole 3a of the column 3 has an axially extending through groove 33 formed thereon. Each needle bearing 5 is received in the through groove 33. In this way, by forming a through groove as a supporting hole, or a bearing pocket, for each needle bearing 5, working process of the column 3 becomes easier.

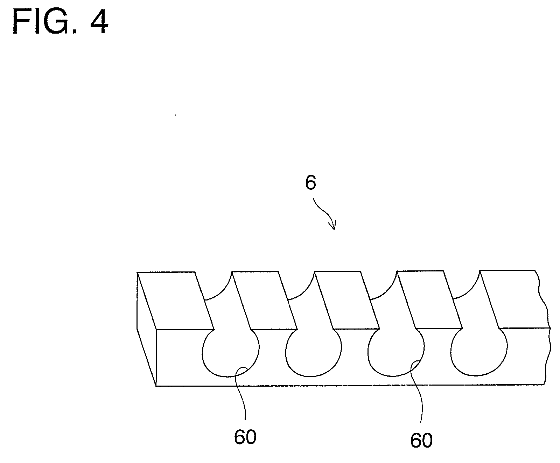

An oil retaining member 6 is inserted into the through groove 33, as shown in FIG. 1. The oil retaining member 6 is formed of oil retaining plastics, oil retaining felt, or oil soaked porous materials with continuous air cells. The oil retaining member 6, shown in FIG. 4, has a plurality of notches or grooves 60 for receiving the needle bearings 5. By utilizing such an oil retaining member 6, installation of needle bearings 5 into the through grooves 33 can be conducted with ease.

As is clearly seen in FIGS. 2 and 3, the needle bearings 5 provided at adjacent flat portions 30 of the central through hole 3a are disposed at each corner of the central through hole 3a.

In operation, when the ram 2 and the column 3 moves relatively, e.g. the ram 2 reciprocates relative to the column 3 fixed to a base member (not shown) through a flange portion 35, each needle bearing 5 rotates around the supporting shaft 4 and rolls on the flat portion 20 of the ram 2. In such a manner, travel of the ram 2 relative to the column 3 is smoothly guided.

In this case, since each needle bearing 5 supported around the supporting shaft 4 acts as a linear bearing, a retainerless guide device is achieved. Thus, even when a torsion occurs between the ram 2 and the column 3, skewing due to an inadequate support of the needle bearing 5 is effectively prevented.

Also, since each supporting shaft 4 for rotatably supporting each needle bearing 5 extends in the direction perpendicular to the extending direction of each flat portion 20 of the outer circumferential surface of the ram 2, or to the direction of relative movement of the ram 2 and the column 3, each needle bearing 5 can be securely prevented from skewing relative to the flat portion 20 or the rolling surface.

Furthermore, since each needle bearing 5 at the adjacent flat portions 30 of the central through hole 3a of the column 3 is disposed at each corner of the central through hole 3a, each corner portion of the outer circumferential surface of the ram 2 can be held by each roller bearing 5, thereby enabling a firm support of the ram 2. As a result, even when an excessive torsion occurs between the ram 2 and the column 3, skewing of each needle bearing 5 can be securely prevented.

Moreover, in operation of the device, when each needle bearing 5 rotates, oil gradually bleeds from the oil retaining member 6 contacting the needle bearing 5, thereby preventing seizure or wear to the rolling surface resulting from breakage of oil film. Also, in this case, since oil bleeds for a long time, a long-term lubrication of the rolling surface becomes possible, thus allowing for maintenance-free device.

In addition, assembly error between the ram 2 and the column 3 can be adjusted by utilizing a needle bearing 5 with an outer race 50 of different outer diameters, which facilitating adjustment of the whole device.

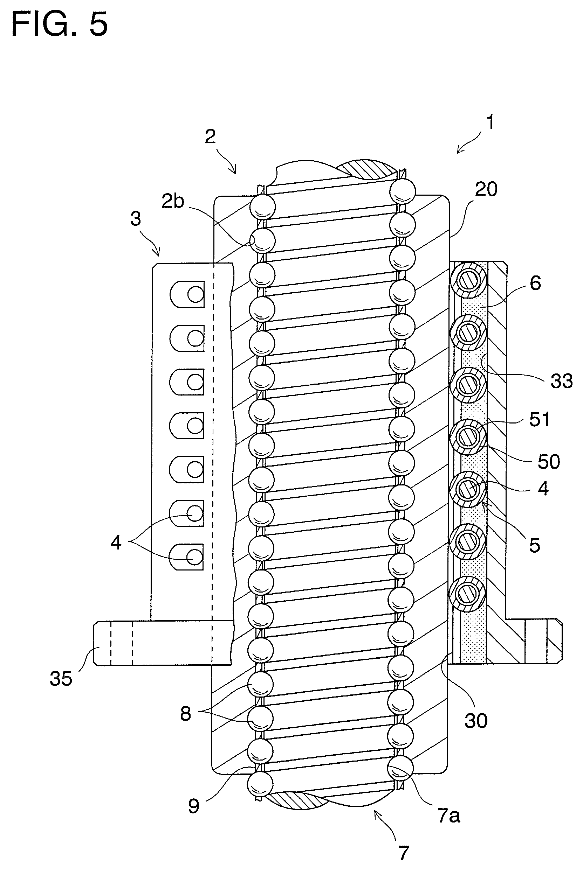

Next, FIG. 5 shows a guide device incorporating a ball screw. In this guide device 1, a spiral groove 2b is formed on the inner circumferential surface of the central hole 2a of the ram 2. A screw shaft 7 is inserted into the central hole 2a of the ram 2. A spiral groove 7a is formed on the outer circumferential surface of the screw shaft 7. Between the inner circumferential surface of the ram 2 and the outer circumferential surface of the screw shaft 7 is interposed a thin-walled, cylindrical retainer 9 for rotatably supporting a plurality of balls 8 engaging rollably with both the spiral groove 2b of the ram 2 and the spiral groove 7a of the screw shaft 7.

In operation, when the screw shaft 7 rotates, each ball 8 rolls and travels along the spiral grooves 7a and 2b of the screw shaft 7 and the ram 2, and thus, the ram 2 moves axially along the screw shaft 7. During this movement, each needle bearing 5 guides the movement of the ram 2 and the ram 2 functions as a nut of a ball screw.

In the aforementioned embodiments, the ram 2 has an outer circumferential surface of a rectangular cross shape and the column 3 has a central through hole 3a of a rectangular cross shape, but the present invention is also applicable to a ram and a column of other polygonal cross shapes.

Additionally, in the aforementioned embodiments, the ram 2 generally has a shorter length, but the present invention also has application to a linear guide having an infinite or longer rail.

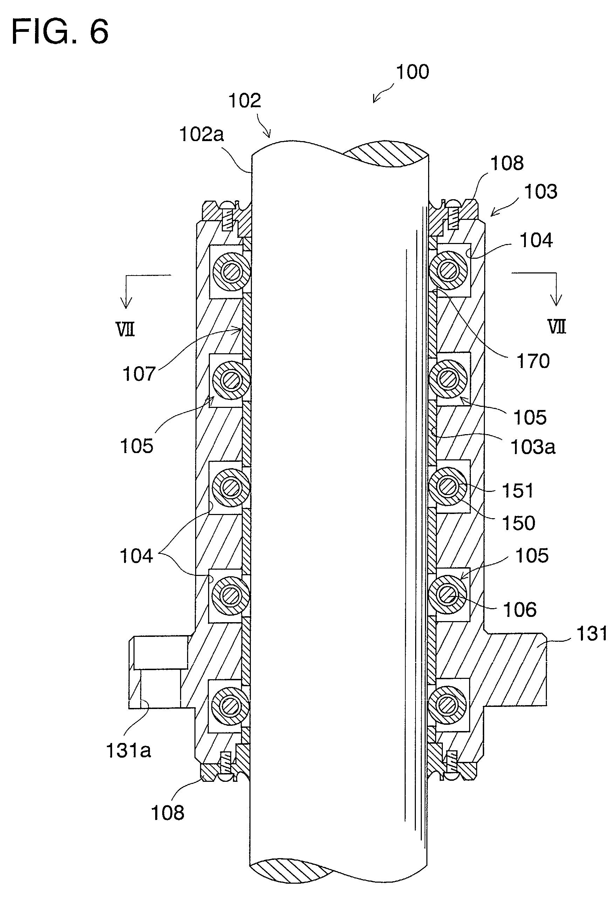

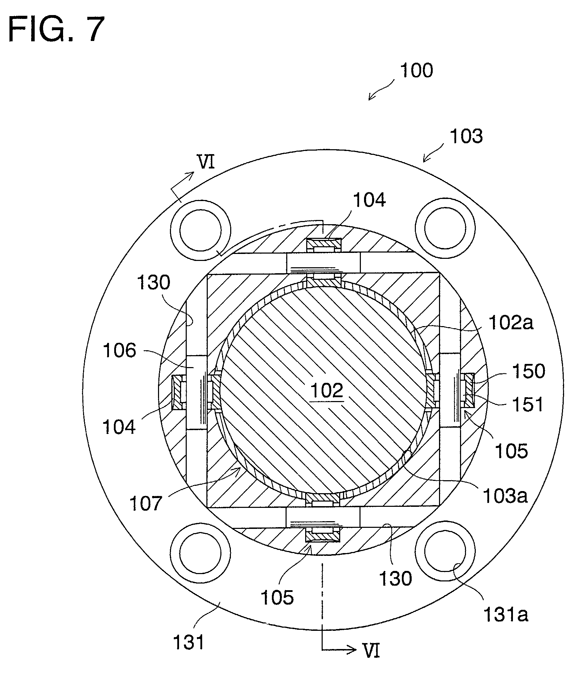

FIGS. 6 and 7 illustrate an alternative embodiment of the present invention. As shown in FIGS. 6 and 7, a guide device 100 includes a solid cylindrical ram 102 and a cylindrical column 103 disposed around the ram 102 and translatable axially relative to the ram 102.

The ram 102 has an outer circumferential surface 102a of a round cross shape. The column 103 is disposed outside the outer circumferential surface 102a of the ram 102 and has a through hole 103a of a round cross shape. A plurality of pockets 104 are formed on an inner circumferential surface of the through hole 103a. Each pocket 104 receives a needle bearing 105 for slidably supporting the column 103 relative to the ram 102 in the axial direction.

Each pocket 104 is formed at least at both end openings of the through hole 103a and preferably spaced equally in a circumferential direction. Here, four pockets 104 are formed at 90-degree intervals circumferentially, but three pockets may be provided at 120-degree intervals, or six pockets at 60-degree intervals. Different number of pockets may be used. The number of pockets is suitably determined according to a diameter of the ram, an allowable load to the guide device and so on.

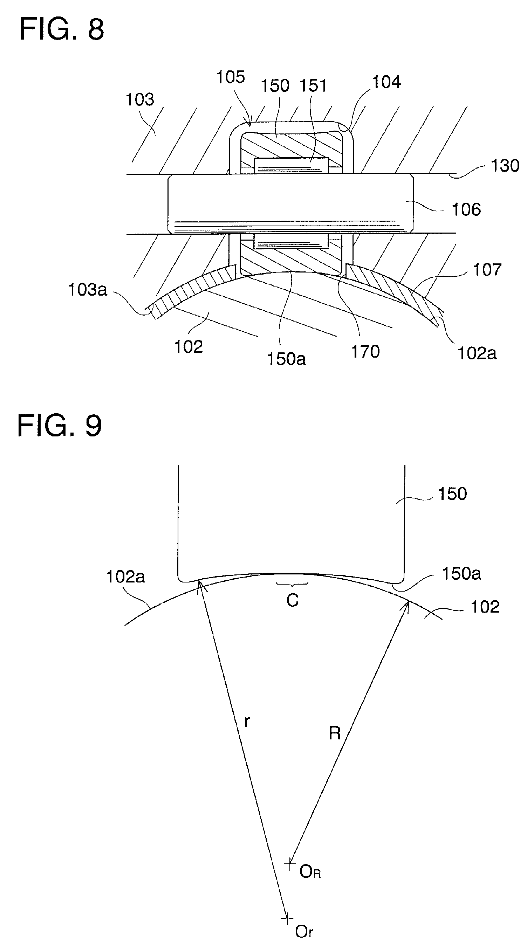

As shown in FIG. 8, the needle bearing 105 includes a cylindrical outer race or rolling element 150 that rolls on the outer circumferential surface 102a of the ram 102 axially or in the direction perpendicular to the page, and a plurality of needle rollers 151 supported rotatably on an inner circumferential surface of the outer race 150. The needle bearing 105 is supported by a supporting shaft 106 inserted thereinto through the needle rollers 151 and thus, the outer race 150 is rotatable around the supporting shaft 106.

As shown in FIG. 9, the outer race 150 preferably has a concavely curved cylindrical surface 150a i. e. a generating line of the cylindrical surface 150a is concavely curved. The cylindrical surface 150a of the outer race 150 has a radius of curvature slightly greater than that of the outer circumferential surface 102a of the ram 102. There exists an inequality, $0.52D \leqq r \leqq 0.58D$, wherein r: radius of curvature of the cylindrical surface 150a; D: diameter of the outer circumferential surface 102a of the ram 102 contacting the cylindrical surface 150a, which equals to 2R (R: radius of the outer circumferential surface 102a).

Thereby, contact area with the outer circumferential surface 102a of the ram 102 increases and surface pressure of the rolling surface decreases, thus improving wear resistance and allowing for a greater allowable load. Furthermore, a smooth rotation of the outer race 150 is secured and skewing of the outer race 150 is prevented. Also, in this case, since a contact surface C between the cylindrical surface 150a of the outer race 150 and the outer circumferential surface 102a of the ram 102 is formed at a central portion of the cylindrical surface 150a, a contact radius or distance between a center line of the outer race 150 and a contact surface C in every portion of the contact surface C is substantially equal to each other. Thereby, a differential slippage due to the rotation of the outer race 150 is prevented from occurring at the contact surface C, thus preventing wear to the contact surface C.

In addition, in the case that a radius r of curvature of the cylindrical surface 150a of the outer race 150 is smaller than 0.52D, a smooth rotation of the outer race 150 is restrained and differential slippage will occur. On the other hand, in the case that a radius r of curvature of the outer race 150 is greater than 0.58D, a contact area becomes smaller and an allowable load will decrease.

The cylindrical surface of the outer race 150 may have a linear generating line. In this case, working of the outer race 150 will become easier. Alternatively, the outer race 150 may include a first outer race having a cylindrical surface that satisfies the above-mentioned inequality and a second outer race having a linear cylindrical surface. In this case, the first outer race may be disposed at regions where a relatively greater load is applied, and the second outer race may be disposed at the other regions.

Each supporting shaft 106, shown in FIG. 7, is inserted into a supporting hole 130 formed at each pocket 104 inside the column 103 and both end portions of the supporting shaft 106 is supported in the supporting hole 130. Thereby, supporting rigidity of the supporting shaft 106 is improved and adequate support of the needle bearing 105 is secured. Also, each supporting hole 130 penetrates the outer circumferential surface of the column 103, which facilitates boring process of the column 103. Furthermore, since each supporting hole 130 is a through hole, a pitch or a distance from a center of the ram 102 to a centerline of each supporting hole 130 can be made accurate using a working method such as a wire cut electrical discharge machining.

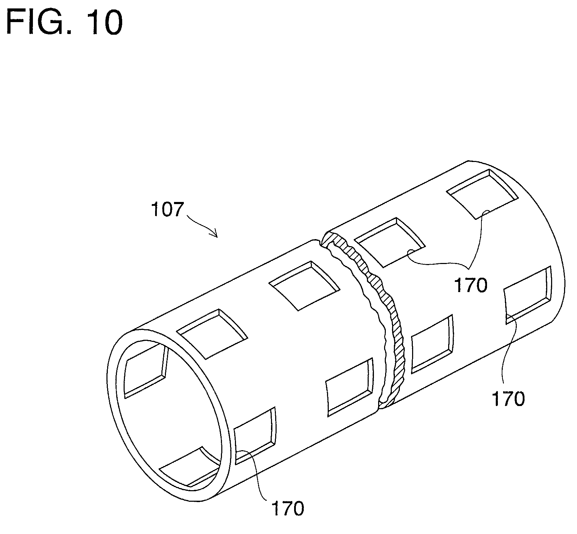

Between the ram 102 and the column 103 is interposed a thin-walled, cylindrical member 107. The thin-walled cylindrical member 107, shown in FIG. 10, has a plurality of apertures 170 each corresponding to the pocket 104. The cylindrical member 107 is provided for sustaining a radial load applied between the ram 102 and the column 103, and may be formed of bearing materials such as an oil retaining metal or plastics in view of lubricating properties and wear resistance. Especially, a dry-type, Teflon bearing is preferable because no lubricants are required.

In addition, the column 103 has a flange 131 at its lower portion to bolt a base member (not shown) through a bolt hole 131a. Also, there is provided a dust seal 108 at both openings of the central through hole 103a to prevent dust from entering the through hole 103a.

In operation, when the ram 102 and the column 103 moves relatively, e.g. the ram 102 reciprocates relative to the column 103 fitted to the base member (not shown) through the flange 131, each outer race 150 of the needle bearings 105 rotates around each supporting shaft 106 and rolls axially on the outer circumferential surface 102a of the ram 102. Thereby, movement of the ram 2 relative to the column 103 is smoothly guided.

In this case, since each needle bearing 105 functions as a linear bearing, a retainerless guide device is achieved. Furthermore, according to this embodiment, it is not a needle roller of a small diameter but a roller-shaped outer race 150 of a larger diameter rotatably supported around the supporting shaft 106 through a plurality of needle rollers 151 that rolls in the axial direction on the outer circumferential surface 102a of the ram 102. Thus, rotation of the outer race 150 is hard to be hindered by dust or small particles on the rolling surface, thereby allowing for use of the guiding device under the dusty atmosphere.

Those skilled in the art to which the invention pertains may make modifications and other embodiments employing the principles of this invention without departing from its spirit or essential characteristics particularly upon considering the forgoing teachings. The described embodiments and examples are to be considered in all respects only as illustrative and not restrictive. The scope of the invention is, therefore, indicated by the appended claims rather than by the foregoing description. Consequently, while the invention has been described with reference to particular embodiments and examples, modifications of structure, sequence, materials and the like would be apparent to those skilled in the art, yet fall within the scope of the invention.

**Claims**

1. A guide device for supporting a column having a ram inserted thereinto to allow relative axial movement between said column and said ram,

   said ram having an outer circumferential surface of a polygonal-shaped cross section, said outer circumferential surface having a plurality of ram flat portions, each of said ram flat portions extending along an axial direction of said ram,

   said column being disposed around said outer circumferential surface of said ram, said column having a through hole of a polygonal-shaped cross section, said through hole being formed of a plurality of column flat portions, each of said column flat portions corresponding to each of said ram flat portions,

   a plurality of roller-shaped rolling elements being provided at each of said column flat portions of said through hole of said column, said rolling elements rolling on the corresponding ram flat portion,

   a plurality of supporting shafts being provided in said column, each of said supporting shafts extending toward the direction perpendicular to the extending direction of each of said ram flat portions, each of said supporting shafts supporting each of said rolling elements rotatably.

2. The guide device of claim 1, wherein said rolling elements at said adjacent column flat portions of said through hole of said column are disposed at corners of said through hole.

3. The guide device of claim 1 or 2, wherein each of said supporting shafts is supported on both end portions thereof inside said column.

4. The guide device of claim 1 or 2, wherein each of said column flat portions of said through hole has a longitudinal groove formed thereon, said longitudinal groove extending toward the extending direction of each of said column flat portions, said rolling elements being received in said longitudinal groove.

5. The guide device of claim 4, wherein said longitudinal groove has an oil retaining member inserted thereinto.

6. The guide device of claim 1 or 2, wherein said ram has a central hole, said central hole having a first spiral groove formed on an inner circumferential surface thereof, a screw shaft having a second spiral groove formed on an outer circumferential surface thereof, said screw shaft being inserted into said central hole of said ram, a thin-walled, cylindrical retainer being interposed between said inner circumferential surface of said central hole of said ram and said outer circumferential surface of said screw shaft, said cylindrical retainer supporting a plurality of balls rotatably, said balls rolling on both said first spiral groove of said ram and said second spiral groove of said screw shaft.

7. A guide device for supporting a cylindrical column having a solid cylindrical ram inserted thereinto to allow relative axial movement between said column and said ram,

   said ram having an outer circumferential surface of a circular-shaped cross section,

   said column being disposed around said outer circumferential surface of said ram, said column having a through hole of a circular-shaped cross section, said through hole extending axially,

   said through hole of said column having a plurality of pockets formed on an inner circumferential surface thereof, a roller-shaped rolling element and a supporting shaft for supporting said rolling element being provided in each of said pockets, said rolling element rolling axially on said outer circumferential surface of said ram.

8. The guide device of claim 7, wherein said rolling element has a concavely curved cylindrical surface, a radius r of curvature of a generating line of said cylindrical surface satisfies an inequality;

$$0.52D \leqq r \leqq 0.58D$$

   wherein D is a diameter of said outer circumferential surface of said ram.

9. The guide device of claim 7, wherein said rolling element has a cylindrical surface with a linear generating line.

10. The guide device of claim 7, wherein said rolling element includes a first rolling element and a second rolling element, said first rolling element having a concavely curved cylindrical surface, a radius r of curvature of a generating line of said cylindrical surface of said first rolling element satisfying an inequality;

$$0.52D \leqq r \leqq 0.58D$$

wherein D is a diameter of said outer circumferential surface of said ram, said second rolling element having a cylindrical surface with a linear generating line.

11. The guide device of claim 7, wherein said pockets are formed at least at an opening of said through hole of said column and spaced equally circumferentially on said inner circumferential surface of said through hole.

12. The guide device of claim 7, wherein said supporting shaft is inserted into a supporting hole formed in each of said pockets inside said column and is supported on both end portions in each of said pockets.

13. The guide device of claim 7, wherein a thin-walled, cylindrical member is interposed between said ram and said column, said cylindrical member having a plurality of apertures corresponding to said pockets of said column, said cylindrical member being adapted to bear a radial load.

14. The guide device of claim 12, wherein said supporting hole penetrates an outer circumferential surface of said column.

15. The guide device of claim 13, wherein said cylindrical member is formed of bearing materials.

16. A guide device (1; 100) comprising a first longitudinal member (2; 102) received in a longitudinally extending annular member (3; 103) for relative axial sliding movement, the annular member supporting a plurality of shafts (4; 106) about which respective bearing means (5; 105) are disposed to rotate to allow said axially sliding movement, the shafts being generally orthogonal to said axis of sliding movement.

# FIG. 1

FIG. 2

# FIG. 3

FIG. 4

6

60          60

# FIG. 5

# FIG. 6

# FIG. 7

# FIG. 8

# FIG. 9

FIG. 10

**European Patent Office**

## EUROPEAN SEARCH REPORT

Application Number

EP 01 31 0169

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | US 4 346 945 A (TSUBOI NOBUYUKI) 31 August 1982 (1982-08-31) | 1,3,4, 7-12,14, 16 | F16C29/04 B23Q1/40 B21D37/12 |
| Y A | * column 2, line 12 - column 6, line 68 * * figures 1-16 * | 2,5,6,15 13 | |
| Y | US 3 859 003 A (SCHULZ GEORGE W ET AL) 7 January 1975 (1975-01-07) * column 2, line 37 - column 4, line 37 * * figures 1-5 * | 2 | |
| Y | US 3 347 603 A (VLADIMIR IGNATJEV) 17 October 1967 (1967-10-17) * column 1, line 71 - column 2, line 66 * * figures 1-4 * | 5,15 | |
| Y | EP 0 924 025 A (NIPPON THOMPSON CO LTD) 23 June 1999 (1999-06-23) * column 1, line 24 - column 2, line 47 * * figures 9,10 * | 6 | TECHNICAL FIELDS SEARCHED (Int.Cl.7) |
| X | US 3 622 211 A (MITTON ROBERT E) 23 November 1971 (1971-11-23) * column 1, line 36 - column 2, line 31 * * figures 1-4 * | 7-12,14, 16 | F16C B23Q B21D B65G |
| A | US 5 161 926 A (SCHULZ GEORGE W) 10 November 1992 (1992-11-10) * column 2, line 37 - column 3, line 55 * * figures 1-4 * | 1-5 | B61B |

The present search report has been drawn up for all claims

| Place of search | Date of completion of the search | Examiner |
|---|---|---|
| THE HAGUE | 19 April 2002 | Papatheofrastou, M |

EPO FORM 1503 03.82 (P04C01)

**ANNEX TO THE EUROPEAN SEARCH REPORT
ON EUROPEAN PATENT APPLICATION NO.**          EP 01 31 0169

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2002

| Patent document cited in search report | | Publication date | Patent family member(s) | | Publication date |
|---|---|---|---|---|---|
| US 4346945 | A | 31-08-1982 | NONE | | |
| US 3859003 | A | 07-01-1975 | NONE | | |
| US 3347603 | A | 17-10-1967 | NONE | | |
| EP 0924025 | A | 23-06-1999 | JP<br>EP<br>US | 11182545 A<br>0924025 A2<br>6149307 A | 06-07-1999<br>23-06-1999<br>21-11-2000 |
| US 3622211 | A | 23-11-1971 | NONE | | |
| US 5161926 | A | 10-11-1992 | NONE | | |

EPO FORM P0459

For more details about this annex : see Official Journal of the European Patent Office, No. 12/82